# EUROPÄISCHE PATENTSCHRIFT

(11) **EP 1 874 570 B1**
(45) Veröffentlichungstag und Bekanntmachung des Hinweises auf die Patenterteilung: **27.07.2011**
(21) Anmeldenummer: 06724160.4
(22) Anmeldetag: 08.04.2006
(51) Int. Cl.: B60G 17/015, B60G 17/052

(54) **KRAFTFAHRZEUG MIT EINER PNEUMATISCHEN NIVEAUREGELANLAGE**
MOTOR VEHICLE EQUIPPED WITH A LEVEL CONTROL SYSTEM
VEHICULE A MOTEUR EQUIPE D'UN CORRECTEUR D'ASSIETTE PNEUMATIQUE

(30) Priorität: 21.04.2005 DE 102005018434
(43) Veröffentlichungstag der Anmeldung: 09.01.2008
(73) Patentinhaber: Continental Teves AG & Co. OHG, 60488 Frankfurt (DE)
(72) Erfinder: STILLER, Alexander, 30823 Garbsen (DE)
(86) Internationale Anmeldenummer: PCT/EP2006/003223
(87) Internationale Veröffentlichungsnummer: WO 2006/111282

(56) Entgegenhaltungen:
- EP-A- 0 941 876
- DE-C1- 3 601 176
- US-A- 5 014 199
- US-A- 5 484 162

## Beschreibung

Die Erfindung betrifft gemäß dem Oberbegriff des Anspruchs 1 eine pneumatische Niveauregelanlage in einem Kraftfahrzeug, welches eine Fahrzeugbatterie und einen die Fahrzeugbatterie speisenden Generator aufweist, und einem der Niveauregelanlage zugeordneten, elektrisch betriebenen Verdichter mit einem Elektromotor, wobei der Elektromotor des Verdichters nur unter bestimmten Bedingungen durch die Fahrzeugbatterie und/oder den Generator stromversorgt ist.

Aus dem Stand der Technik sind verschiedene Niveauregelanlagen für Kraftfahrzeuge bekannt. So ist z.B. aus der DE3601176C1 ein Kraftfahrzeug mit einer pneumatischen Niveauregelanlage bekannt, welche von einem elektrisch betriebenen Kompressor versorgt wird. Um ein vorzeitiges Erschöpfen der Batterie zu vermeiden, welches bei ständiger Versorgung des Kompressors mit elektrischer Energie über die Batterie des Kraftfahrzeuges zu befürchten ist, wird der Kompressor bei stillstehender Brennkraftmaschine und dem Erreichen oder Unterschreiten eines unteren Niveaugrenzwertes nur betrieben, wenn der Kofferraum des Kraftfahrzeuges geöffnet ist.

Dies hat den Nachteil, dass bei anderweitiger Beladung eines Kraftfahrzeugs mit Niveauregelanlage beispielsweise durch die Beifahrertür oder eine hintere Seitentür eine Schiefstellung des Fahrzeuges erfolgen kann, welche dann im Stillstand nicht ausgeregelt wird. Weiterhin besteht trotz dieser Einschränkung die Gefahr, dass die Batterie des Kraftfahrzeuges auch bei einem Niveauausgleich bei geöffnetem Kofferraumdeckel durch die Niveauregelanlage sehr stark belastet wird und ggf. überlastet wird und anderen sicherheitsrelevanten Systemen nicht mehr genügend Energie zur Verfügung steht.

Die EP 0 941 876 A2 offenbart einen bedarfsabhängig ein- und ausschaltbaren Kompressor und ein Verfahren zur Regelung desselben. Dabei wir der Kompressor bis zum Erreichen einer Grenztemperatur in normaler Weise durchgängig und danach getaktet betrieben. Dadurch verlängert sich allerdings der Regelvorgang als solcher und wird nicht in der gewohnten Regelzeit durchgeführt, was zu Irritationen des Fahrers führen kann.

Der Erfmdung liegt deshalb die Aufgabe zugrunde, die Fahrzeugbatterie des Kraftfahrzeuges durch den Betrieb der Niveauregelanlage nicht zu überlasten.

Die Aufgabe wird durch die Merkmale des Anspruchs 1 gelöst. Erfindungsgemäß ist vorgesehen, dass der Energiebedarf der Niveauregelanlage für einen anstehenden Niveauwechsel und/oder eine anstehende Druckspeicherbefüllung vorab ermittelt wird. Wird von der Niveauregelanlage eine Schiefstellung des Kraftfahrzeuges außerhalb der zulässigen Grenzen erkannt oder ein Niveauwechsel vom Fahrzeugführer oder automatisch angefordert oder eine Druckspeicherbefüllung initiiert, so wird vor der Inbetriebnahme der Niveauregelanlage der benötigte Energiebedarf der Niveauregelanlage zur Einstellung des angeforderten Sollniveaus ermittelt. Zuerst wird mit bekannten Verfahren die für den Niveauwechsel benötigte Luftmenge ermittelt. Der benötigte Energiebedarf kann aus dem zeitlichen Verlauf der elektrischen Aufnahmeleistung des Verdichters für die Überführung der benötigten Luftmenge in die Luftfedern und/oder den Druckluftspeicher und dem zeitlichen Verlauf der Stromaufnahme der einzelnen zu betreibenden Ventile ermittelt werden, da die Beziehung der elektrischen Aufnahmeleistung des Verdichters zum geförderten Volumenstrom bei entsprechendem Gegendruck, die sogenannte Druck-Volumenstrom-Kennlinie, des Verdichters bekannt ist.

Der Vorteil ist darin zu sehen, dass bereits vor der Inbetriebnahme der Niveauregelanlage bei einem anstehenden Niveauwechsel die energetische Auswirkung des Niveauwechsels auf die Fahrzeugbatterie ermittelt und bei dem Niveauwechsel oder für den Betrieb mindestens eines weiteren elektrischen Fahrzeugsystems berücksichtigt werden kann.

Gemäß einer Weiterbildung der Erfindung nach Anspruch 2 ist vorgesehen, dass der anstehende Niveauwechsel und/oder die anstehende Druckspeicherbefüllung nur dann von der pneumatischen Niveauregelanlage durchgeführt wird, wenn der aktuelle Energiezustand der Fahrzeugbatterie abzüglich des Energiebedarfs des anstehenden Niveauwechsels und/oder der anstehenden Druckspeicherbefüllung mindestens einen ersten Schwellwert überschreitet. Der Schwellwert ist so zu bemessen, dass zumindest ein minimaler und sicherheitsrelevanter Betrieb des Kraftfahrzeuges oberhalb des Schwellwertes sichergestellt ist. Vorzugsweise kann der Schwellwert auch so bemessen sein, dass oberhalb des Schwellwertes alle für den Fahrzeugbetrieb relevanten Fahrzeugsysteme betriebsbereit sind. Der Vorteil der Weiterbildung ist darin zu sehen, dass der Niveauwechsel nur dann durchgeführt wird, wenn die Fahrzeugbatterie durch diesen nicht überlastet wird und das Kraftfahrzeug betriebsbereit bleibt. Damit ist der einwandfreie Betrieb zumindest der Fahrzeugsysteme eines Kraftfahrzeuges mit einer Niveauregelanlage, wie z.B. Türschließsysteme oder Startsysteme oder der sicherheitsrelevanten Brems- oder Lenksysteme, nach einem Niveauwechsel immer gewährleistet.

Gemäß einer Weiterbildung nach Anspruch 3 ist vorgesehen, dass der erste Schwellwert zusätzlich unter der Berücksichtigung der Energiezufuhr zur Fahrzeugbatterie ermittelt wird. Der Vorteil ist darin zu sehen, dass bei der Ermittlung des Schwellwertes nicht nur der aktuelle Ladezustand der Fahrzeugbatterie sondern auch die Energiezufuhr zur Fahrzeugbatterie durch den Generator bei laufender Brennkraftmaschine berücksichtigt wird, was die Verfügbarkeit der Niveauregelanlage und damit den Fahrkomfort erhöht.

Gemäß einer bevorzugten Ausführungsform nach Anspruch 4 ist vorgesehen, dass der erste Schwellwert zusätzlich unter der Berücksichtigung des aktuellen und/oder des zukünftiger Energiebedarfs mindestens eines weiteren elektrischen Energieverbrauchers des Kraftfahrzeuges ermittelt wird. Der Vorteil ist darin zu sehen, dass auch die elektrische Aufnahmeleistung weiterer Fahrzeugsysteme, wie z.B. Bremssysteme, Lenkungssysteme oder Lichtsysteme, bei der Ermittlung des Schwellwertes berücksichtigt werden und somit eine Überlastung der Fahrzeugbatterie durch die überwachten Fahrzeugsysteme vermieden und der Betrieb zumindest der sicherheitsrelevanten Fahrzeugsysteme des Kraftfahrzeuges nach dem möglichen Betrieb der Niveauregelanlage sichergestellt werden kann.

Gemäß einer Ausführungsform nach Anspruch 5 ist vorgesehen, dass mehrere Schwellwertgrenzen vorhanden sind, wobei die pneumatische Niveauregelanlage oberhalb des ersten Schwellwertes und unterhalb eines zweiten Schwellwertes nur eingeschränkt funktionsfähig ist. Vorteilhafterweise werden mehrere Schwellwerte definiert, wobei oberhalb eines ersten und unterhalb eines zweiten Schwellwertes nur die hochsicherheitsrelevanten Niveauregelfunktionen, wie z.B. Ausgleich einer Schiefstellung in beispielsweise ein Zwischenniveau oder nur Absenken des Niveaus bei hohen Fahrzeuggeschwindigkeiten oder ähnliches, funktionsfähig sind. Oberhalb eines zweiten Schwellwertes können dann alle Funktionen der Niveauregelanlage angewählt und ausgeführt werden.
Es ist aber auch möglich einen dritten oder weitere Schwellwerte zu definieren, um beispielsweise oberhalb eines zweiten und unterhalb eines möglichen dritten Schwellwertes weitere weniger sicherheitsrelevante Funktionen der Niveauregelanlage, wie z.B. Aufpumpen in das Normalniveau des Fahrzeuges, zu ermöglichen und erst oberhalb des dritten oder eines weiteren Schwellwertes alle Funktionen der Niveauregelanlage frei zuschalten und ausführbar zu gestalten.

Gemäß einer Ausführungsform nach Anspruch 6 ist vorgesehen, dass ein Zwischenniveau, welches zwischen einem angestrebten Sollniveau und dem aktuellen Fahrzeugniveau liegt, angesteuert wird, sodass der Energiezustand der Fahrzeugbatterie nach dem Erreichen des Zwischenniveaus einen ersten Schwellwert überschreitet. Der Vorteil der Weiterbildung ist darin zu sehen, dass, obwohl der Ladezustand der Fahrzeugbatterie einen vollständigen Niveauwechsel vom aktuellen Fahrzeugniveau in das Sollniveau des Fahrzeuges nicht zulässt, ein teilweiser Niveauwechsel in die gewünschte Richtung der Niveauverstellung durchgeführt wird, ohne die Fahrzeugbatterie zu überlasten. Dabei wird entweder das Fahrzeugniveau sukzessive erhöht und der Ladezustand der Fahrzeugbatterie sukzessive überprüft oder aber es wird vorab anhand des zulässigen Energieverbrauchs der Niveauregelanlage ein Fahrzeugniveau angesteuert, ohne den Schwellwert zu Erreichen oder zu unterschreiten. Vorzugsweise wird dabei der maximal zulässige Energiebedarf der Niveauregelanlage ermittelt und dann das maximal mögliche Fahrzeugniveau eingestellt, welches dem Sollniveau am nächsten kommt, ohne dabei die Fahrzeugbatterie zu überlasten.

Gemäß einer Ausführungsform nach Anspruch 7 ist vorgesehen, dass als Schwellwert die Batteriespannung, der Batteriestrom oder die Batterieleistung verwendet wird. Der Vorteil ist darin zu sehen, dass die Batteriespannung, der Batteriestrom oder die Batterieleistung, als Produkt aus Batteriespannung und Batteriestrom, mit einfachen Mitteln gemessen und/oder berechnet werden kann oder über eine Kommunikationsleitung, wie z.B. CAN-Bus, von dem Steuergerät des Fahrzeugsystems der Batterie an das Steuergerät der Niveauregelanlage übertragen werden kann.

Gemäß einer Ausführungsform nach Anspruch 8 ist vorgesehen, dass der Energiezustand der Fahrzeugbatterie nach dem abstellen des Fahrzeugmotors ermittelt und abgespeichert wird, anhand des Energiezustandes ein dritten Schwellwert für den für die Niveauregelanlage zulässigen Energiebedarf festlegbar ist, die Summe der durch die Niveauregelanlage verbrauchten Energie der seit dem abstellen des Fahrzeugmotors durchgeführten Niveauwechsel und/oder Druckspeicherbeftillungen und des für den anstehenden Niveauwechsel und/oder der anstehenden Druckspeicherbefüllung benötigten Energiebedarfs unterhalb des dritten Schwellwertes liegt. Der Vorteil ist darin zu sehen, dass der Niveauregelanlage im Stillstand des Kraftfahrzeuges und bei abgeschaltetem Verbrennungsmotor, welcher normalerweise auch den Generator der Batterie antreibt, ein definierter maximal zu verbrauchender Energiebedarf zugewiesen wird. Dieser kann von dem Ladezustand der Fahrzeugbatterie abhängig sein.

Mit diesem maximal zu verbrauchenden Energiebedarf (dritter Schwellwert) lassen sich eine bestimmte Anzahl von Niveauwechseln und/oder Druckspeicherbefüllungen bei abgeschaltetem Verbrennungsmotor durchführen. Vorteilhafterweise wird der dritte Schwellwert in Abstimmung mit weiteren Fahrzeugsystemen und deren bei abgeschaltetem Verbrennungsmotor zukünftig zur Verfügung stehendem Energiebedarf abgestimmt, sodass das Kraftfahrzeug immer betriebsbereit bleibt und jedes Fahrzeugsystem eine bestimmte Anzahl von Funktionen durchführen kann und die Fahrzeugbatterie nicht nur von einem einzelnen Fahrzeugsystem entladen wird. Betriebsbereit bedeutet, dass zumindest die ggf. elektrisch betriebene Türschließanlage funktionsfähig bleibt und das Kraftfahrzeug mit Hilfe eines von der Fahrzeugbatterie mit Energie versorgten Starters gestartet werden kann.

Die Erfindung wird im folgenden anhand der Figur erläutert, wobei die Figur ein Blockschaltbild zur Durchführung der Erfindung zeigt.

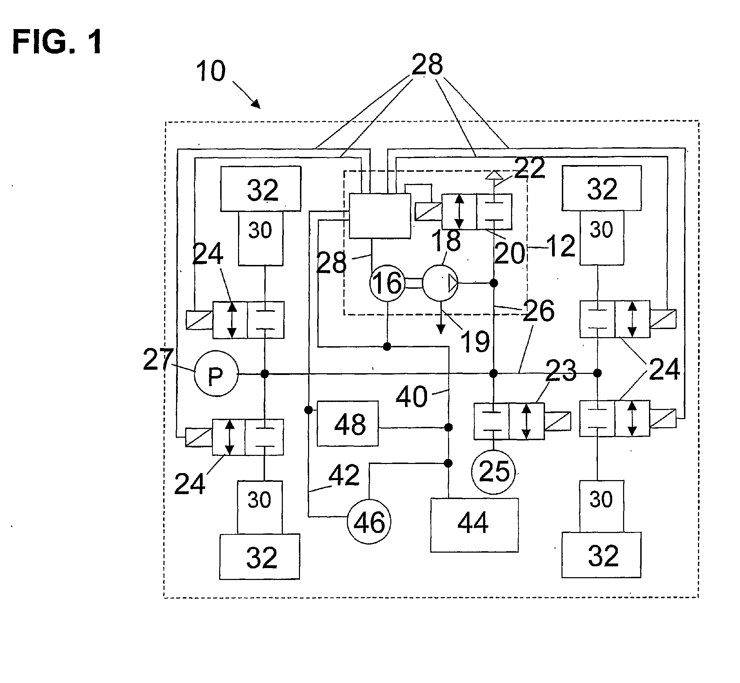

Die Figur 1 zeigt in schematisch stark vereinfachter Form ein Kraftfahrzeug 10 mit einer Niveauregelanlage 12, einer Fahrzeugbatterie 44, einem Generator 46 und mindestens einem weiteren Fahrzeugsystem 48. Das Kraftfahrzeug 10 weist weiterhin vier einzelne Räder 32 und jedem dieser Räder 32 zugeordnet eine Federungseinheit 30, vorzugsweise eine Luftfeder oder ein Luftfederbein bestehend aus Luftfeder und Stoßdämpfer, auf. Jede der Federungseinheiten 30 ist über eine Verbindungsleitung 26 mit einem Verdichter 18 und einem die Verbindungsleitung im Grundzustand schließendes und im geschalteten Zustand öffnendes 2/2-Wegeventil 24 verbunden. Weiterhin kann Luft aus den Federungseinheiten 30 über die Verbindungsleitung 26 und bei geöffnetem Ventil 24 und geöffnetem Ablassventil 20 über die Ablassleitung 22 in die Atmosphäre geleitet werden, um das Niveau des Fahrzeugs zu verringern.

Ein weiteres 2/2-Wegeventil 23 sperrt in seinem Grundzustand eine Verbindung eines Druckspeichers 25 von der Verbindungsleitung 26 ab und verbindet in einem zweiten Schaltzustand den Druckspeicher 25 mit der Verbindungsleitung 26. Das Druckniveau im Druckspeicher 25 kann angehoben werden, indem ein Elektromotor 16 des Verdichter 18 betrieben wird und der Verdichter 18 Luft aus der Atmosphäre über die Ansaugleitung 19 ansaugt, verdichtet und über die Verbindungsleitung 26 und geöffnetem Ventil 23 dem Druckspeicher zuführt, wobei das Druckniveau des Druckspeichers 25 wesentlich höher ist als das Druckniveau in den Federelementen 30, um ggf. Druckluft von dem Druckspeicher 25 in die Federelemente 30 zu übertragen.

Das Fahrzeugniveau kann angehoben werden, indem ein Elektromotor 16 des Verdichter 18 betrieben wird und der Verdichter 18 Luft aus der Atmosphäre über die Ansaugleitung 19 ansaugt, verdichtet und über die Verbindungsleitung 26 und geöffnetem Ventil 24 der jeweiligen Federungseinheit 30 zuführt oder das Ventil des Druckspeichers 25 geöffnet wird bis das gewünschte Fahrzeugniveau erreicht ist. Die Fahrzeughöhe kann dabei von nicht dargestellt Höhensensoren erfasst werden. Die Signale der Höhensensoren werden dann dem Steuergerät 14 der Niveauregelanlage 12 beispielsweise über eine Kommunikationsleitung 42 zugeführt und im Steuergerät 14 verarbeitet. Das Steuergerät 14 der Niveauregelanlage 12 steuert dann über eine jeweilige Steuerleitung 28 die entsprechenden Bestandteile, wie z.B. Elektromotor 16, Ventile 24 oder Ablassventil 20 an, um die geforderte Fahrzeughöhe einzustellen.

Um die Fahrzeugbatterie 44 durch einen Niveauregelvorgang, Aufpumpen oder Ablassen, nicht zu überlasten, wird erfindungsgemäß vor jedem Niveauregelvorgang der Energiebedarf der Niveauregelanlage für die Einstellung des angeforderten Höhenniveaus ermittelt. Dazu wird die für den Niveauregelvorgang benötigte Luftmenge durch das Steuergerät 14 mit an sich bekannten Verfahren ermittelt, indem beispielsweise das benötigte Luftvolumen als Produkt aus der geforderten Höhenänderung mit dem bekannten Luftfederquerschnitt ermittelt und mit dem durch einen Drucksensor 27 ermittelten Druck in der jeweiligen Federungseinheit 30 multipliziert wird. Die elektrische Leistung, welche der Elektromotor 16 des Verdichters bei der Ausregelung des angeforderten Fahrzeugniveaus verbrauchen würde, sowie deren zeitlicher Verlauf ist aus der an sich bekannten Förderkennlinie des Verdichter, welche die Kennzahlen Volumenstrom, Gegendruck und Stromverlauf über der Zeit enthält, bekannt. Damit erhält man vorab zumindest in vereinfachter Form die Dauer des angeforderten Niveauregelvorganges und die durchschnittliche elektrische Leistungsaufnahme des Elektromotors 16.

Die Abschätzung des Energiebedarfs kann jedes Mal vor einem Niveauregelvorgang vom Steuergerät 14 der Niveauregelanlage 12 ermittelt werden oder es können vorab, empirisch oder rechnerisch, ermittelte Werte für die entsprechenden Niveauwechsel im Steuergerät 14 hinterlegt und abgespeichert sein. Diese Abschätzung kann den worst-case-Fall des Energiebedarfs für den jeweiligen Niveauwechsel, z.B. von dem tiefsten Niveau in das höchste Niveau, umfassen. Dabei ist im Normalfall für jeden möglichen Niveauwechsel, z.B. Tiefniveau in Normalniveau, Tiefniveau in Hochniveau oder Normalniveau in Hochniveau und umgekehrt, ein Speicherwert vorzusehen. Die Anzahl der Speicherwerte ist an die Anzahl der Höhenniveaus der Niveauregelanlage 12 angelehnt. Durch die Verwendung von Speicherwerte ist die Abschätzung des Energiebedarfs in dem Steuergerät 14 einfacher umzusetzen und schneller durchzuführen.

Um die Abschätzung des Energiebedarfs der Niveauregelanlage 12 für den anstehenden Niveauregelvorgang noch genauer vornehmen zu können, kann zusätzlich die elektrische Leistung der zu schaltenden Ventile 20, 24 und ggf. des Drucksensors 27 über der berechneten Dauer des angeforderten Niveauregelvorganges berechnet werden. Die Summe aus allen einzelnen elektrischen Leistungsaufnehmern bzw. Verbrauchern der Niveauregelanlage gibt dann den gesamten Energiebedarf für den angeforderten Niveauregelvorgang wieder. Aufgrund der im Vergleich zu elektrischen Leistungsaufnahme des Elektromotors 16 vernachlässigbaren geringen elektrischen Leistungsaufnahme der Ventile 20,24 kann auf die Ermittlung dieser evt. verzichtet werden.

Bei einem Ablassvorgang, also einer Niveaureduzierung, kann es bei bestimmten Niveauregelanlagen 12 der Fall sein, dass ein Betrieb des Verdichters 28 nicht erforderlich ist, sodass dann der Energiebedarf der Niveauregelanlage 12 für einen angeforderten Niveauausgleich in diesem Fall nur aus der elektrischen Leistungsaufnahme der Ventile 20, 24, das Drucksensors 27 und ggf. weiterer nicht dargestellte Bauteile der Niveauregelanlage 12 bestehen kann.

Das Steuergerät 14 der Niveauregelanlage 12 ermittelt über eine Messleitung 40 immer den aktuellen Ladezustand der Fahrzeugbatterie 44. Der aktuelle Ladezustand der Fahrzeugbatterie 44 wird beispielsweise über den aktuellen Spannungswert zwischen dem Plus- und dem Minus-Pol der Fahrzeugbatterie gemessen. Aufgrund des aktuellen Spannungswertes der Fahrzeugbatterie 44 und des bekannten Leistungsniveaus der Fahrzeugbatterie beispielsweise in Amperestunden (Ah) kann der aktuelle Ladezustand und die aktuell aus der Fahrzeugbatterie zur Verfügung stehende Energiemenge ermittelt werden.

Diese aktuell zur Verfügung stehende Energiemenge der Fahrzeugbatterie 44 abzüglich des Energiebedarfs der Niveauregelanlage 12 für den anstehenden Niveauregelvorgang ergibt die nach dem Niveauregelvorgang zur Verfügung stehende Energiemenge der Fahrzeugbatterie 44. Um die Funktionsfähigkeit des Kraftfahrzeuges 10 insbesondere der sicherheitsrelevanten Fahrzeugsysteme, durch einen Niveauregelvorgang der Niveauregelanlage 12 nicht zu beeinträchtigen und die Fahrzeugbatterie 44 nicht zu überlasten, wird der angeforderte Niveauregelvorgang von dem Steuergerät 14 nur initiiert, wenn die nach dem Niveauregelvorgang zur Verfügung stehende Energiemenge der Fahrzeugbatterie 44 einen Schwellwert überschreitet. Es wird also von dem Steuergerät 14 vor der Durchführung eines jeden Niveauregelvorganges geprüft, ob die Fahrzeugbatterie 44 durch diesen anstehenden Niveauregelvorgang nicht überlastet würde, d.h. einen Schwellwert Erreichen oder Unterschreiten würde. Nur wenn dies nicht der Fall ist, wird der Niveauregelvorgang durchgeführt.

Im Stillstand des Fahrzeuges, d.h. wenn der Motor des Fahrzeuges und damit auch der Generator 46 des Fahrzeuges nicht betrieben wird, ist zusätzlich eine maximale Begrenzung der für die Niveauregelanlage 12 zur Verfügung stehenden Energiemenge möglich. Dies kann in Form eines vorab definierten und im Steuergerät 14 gespeicherten weiteren Grenzwertes oder einer maximal zulässigen Anzahl von Niveauregelvorgängen der Niveauregelanlage 12 bis zum nächsten Betrieb des Fahrzeuges bzw. des Generators 46 erfolgen, wobei der Betrieb des Generators 46, vor der Rücksetzung der Anzahl der bereits erfolgten Niveauregelvorgänge, eine bestimmte Mindestzeit überschreiten sollte. Die maximal zulässige Anzahl von Niveauwechseln kann fest im Steuergerät 14 gespeichert sein, unabhängig von dem erfolgten Niveauwechsel und dem erfolgten Energieverbrauch oder aber in Abhängigkeit der erfolgten Niveauwechsel und dem erfolgten Energieverbrauch in einem festgelegten Bereich (maximal zulässiger Energieverbrauch) variiert werden.

Des Weiteren steht das Steuergerät 14 der Niveauregelanlage 12 über eine Kommunikationsleitung 42 mit einem Generator 46, welcher die Fahrzeugbatterie 44 bei laufender Brennkraftmaschine des Kraftfahrzeuges 10 auflädt, und mindestens einem weiteren Fahrzeugsystem 48 in Verbindung und ermittelt deren Energiezufuhr zur Fahrzeugbatterie 44 bzw. deren Energieverbrauch aus der Fahrzeugbatterie und berücksichtigt diesen bei der Ermittlung des aktuellen bzw. zukünftigen Ladezustand und Energiezustandes der Fahrzeugbatterie 44.

Es können auch mehrere Schwellwerte in dem Steuergerät 14 definiert sein, wobei unterhalb eines jeden weiteren Schwellwertes immer weniger Funktionen der Niveauregelanlage 12 ausgeführt werden können. Unterhalb des untersten Schwellwertes ist die Niveauregelanlage 12 beispielsweise vollständig außer Betrieb gesetzt. Oberhalb des untersten und unterhalb eines weiteren Schwellwertes sind beispielsweise nur sicherheitsrelevante Funktionen, wie z.B. Ausgleich einer Schiefstellung oder Ablassen aus einem hohen Fahrzeugniveau ausführbar. Aus diese Art und Weise können mehrere Schwellwerte mit bestimmt definierten Funktionen der Niveauregelanlage 12 verknüpft werden. In diesem Zusammenhang ist es auch möglich, dass von dem Steuergerät 14 der Niveauregelanlage 12 ein Zwischenniveau, welches zwischen dem aktuellen Niveau und dem neuen angeforderten Sollniveau des Kraftfahrzeuges 10 liegt, berechnet und eingestellt wird, sodass der entsprechende Schwellwert nicht unterschritten oder erreicht wird, was in diesem Fall bei einer Ansteuerung des neuen geforderten Sollniveaus passieren würde, da der Energiebedarf der Niveauregelanlage 12 zu hoch wäre und die Fahrzeugbatterie 44 überlasten würde.

### Bezugszeichenliste

### (Teil der Beschreibung)

- 10: Kraftfahrzeug
- 12: Niveauregelanlage
- 14: Steuergerät
- 16: Elektromotor
- 18: Verdichter
- 19: Ansaugleitung
- 20: Ablassventil
- 22: Ablassleitung
- 23: Ventil
- 24: Ventil
- 25: Druckspeicher
- 26: Leitung
- 27: Drucksensor
- 28: Steuerleitung
- 30: Federungseinheit
- 32: Rad
- 40: Messleitung
- 42: Kommunikationsleitung
- 44: Fahrzeugbatterie
- 46: Generator
- 48: Fahrzeugsystem

## Patentansprüche

1. Kraftfahrzeug (10), welches eine pneumatische Niveauregelanlage (12), eine Fahrzeugbatterie (44) und einen die Fahrzeugbatterie (44) speisenden Generator (46)
aufweist, und einem der Niveauregelanlage (12) zugeordneten, elektrisch betriebenen Verdichter (18) mit einem Elektromotor (16), wobei der Elektromotor (16) des Verdichters (18) nur unter bestimmten Bedingungen durch die Fahrzeugbatterie (44) und/oder den Generator (46) stromversorgt ist, **dadurch gekennzeichnet, dass** der Energiebedarf der Niveauregelanlage (12) für einen anstehenden Niveauwechsel und/oder eine anstehende Druckspeicherbefüllung vorab abgeschätzt wird und dass der anstehende Niveauwechsel und/oder die anstehende Druckspeicherbefüllung nur dann von der pneumatischen Niveauregelanlage (12) durchgeführt wird, wenn der aktuelle Energiezustand der Fahrzeugbatterie (44) abzüglich des Energiebedarfs des anstehenden Niveauwechsels mindestens einen ersten Schwellwert überschreitet.

2. Kraftfahrzeug (10) nach Anspruch 1, **dadurch gekennzeichnet, dass** der erste Schwellwert zusätzlich unter der Berücksichtigung der Energiezufuhr zur Fahrzeugbatterie (44) ermittelt wird.

3. Kraftfahrzeug (10) nach Anspruch 1 oder 2, **dadurch gekennzeichnet, dass** der erste Schwellwert zusätzlich unter der Berücksichtigung des aktuellen und/oder des zukünftigen Energiebedarfs mindestens eines weiteren elektrischen Energieverbrauchers (48) des Kraftfahrzeuges (10) ermittelt wird.

4. Kraftfahrzeug (10) nach einem der vorherigen Ansprüche, **dadurch gekennzeichnet, dass** mehrere Schwellwertgrenzen vorhanden sind, wobei die pneumatische Niveauregelanlage (12) oberhalb des ersten Schwellwertes und unterhalb eines zweiten Schwellwertes nur eingeschränkt funktionsfähig ist.

5. Kraftfahrzeug (10) nach Anspruch 4, **dadurch gekennzeichnet, dass** ein Zwischenniveau, welches zwischen einem angestrebten Sollniveau und dem aktuellen Fahrzeugniveau liegt, angesteuert wird, sodass der Energiezustand der Fahrzeugbatterie (44) nach dem Erreichen des Zwischenniveaus einen ersten Schwellwert überschreitet.

6. Kraftfahrzeug (10) nach einem der vorherigen Ansprüche , **dadurch gekennzeichnet, dass** als Schwellwert die Batteriespannung, der Batteriestrom oder die Batterieleistung der Fahrzeugbatterie (44) verwendet wird.

7. Kraftfahrzeug (10) nach Anspruch 4, **dadurch gekennzeichnet, dass** der Energiezustand der Fahrzeugbatterie (44) nach dem abstellen des Fahrzeugmotors ermittelt und abgespeichert wird,
anhand des Energiezustandes ein dritten Schwellwert für den für die Niveauregelanlage (12) zulässigen Energiebedarf festlegbar ist,
die Summe der durch die Niveauregelanlage (12) verbrauchten Energie der seit dem abstellen des Fahrzeugmotors durchgeführten Niveauwechsel und/oder Druckspeicherbefüllung(en) und des für den anstehenden Niveauwechsel und/oder der anstehenden Druckspeicherbefüllung benötigten Energiebedarfs unterhalb des dritten Schwellwertes liegt.

## Claims

1. Motor vehicle (10) which comprises a pneumatic level control system (12), a vehicle battery (44) and a generator (46) supplying the vehicle battery (44), and an electrically operated compressor (18) with an electric motor (16), which compressor is assigned to the level control system (12), the electric motor (16) of the compressor (18) being supplied with power by the vehicle battery (44) and/or the generator (46) only under certain conditions, **characterized in that** the energy requirement of the level control system (12) for a pending level change and/or a pending pressure accumulator filling operation is estimated in advance and **in that** the pending level change and/or the pending pressure accumulator filling operation is/are performed by the pneumatic level control system (12) only when the present energy status of the vehicle battery (44) less the energy requirement of the pending level change exceeds at least a first threshold value.

2. Motor vehicle (10) according to Claim 1, **characterized in that** the first threshold value is additionally determined taking account of the energy supplied to the vehicle battery (44).

3. Motor vehicle (10) according to Claim 1 or 2, **characterized in that** the first threshold value is additionally determined taking account of the present and/or future energy requirement of at least one further electrical energy consumer (48) of the motor vehicle (10).

4. Motor vehicle (10) according to any one of the preceding claims, **characterized in that** a plurality of threshold value limits are present, the pneumatic level control system (12) having only limited functionality above the first threshold value and below a second threshold value.

5. Motor vehicle (10) according to Claim 4, **characterized in that** an intermediate level, lying between a desired set level and the present vehicle level, is actuated, such that the energy status of the vehicle battery (44) exceeds a first threshold value once the intermediate level has been reached.

6. Motor vehicle (10) according to one of the preceding claims, **characterized in that** the battery voltage, the battery current or the battery power of the vehicle battery (44) is used as the threshold value.

7. Motor vehicle (10) according to Claim 4, **characterized in that** the energy status of the vehicle battery (44) is determined and stored once the vehicle engine has been turned off,
a third threshold value is fixable with reference to the energy status for the energy requirement admissible for the level control system (12),
the sum of the energy consumed by the level control system (12) for the level changes and/or pressure accumulator filling operation(s) performed since the vehicle engine was turned off and of the energy requirement necessary for the pending level change and/or the pending pressure accumulator filling operation lies below the third threshold value.

## Revendications

1. Véhicule automobile (10) qui présente
une installation pneumatique (12) de régulation de niveau,
une batterie de véhicule (44) et une génératrice (46) qui alimente la batterie (44) du véhicule,
ainsi qu'un compresseur (18) entraîné électriquement, associé à l'installation (12) de régulation de niveau et présentant un moteur électrique (16),
le moteur électrique (16) du compresseur (18) étant alimenté en courant par la batterie de véhicule (44) et/ou par la génératrice (46) uniquement dans des conditions définies,
**caractérisé en ce que**
les besoins en énergie de l'installation (12) de régulation de niveau en vue d'un changement de niveau envisagé et/ou d'un remplissage envisagé du réservoir sous pression sont estimés préalablement et
**en ce que** le changement de niveau envisagé et/ou le remplissage envisagé du réservoir sous pression ne sont réalisés par l'installation pneumatique (12) de régulation de niveau que si le niveau actuel d'énergie de la batterie de véhicule (44), duquel les besoins d'énergie du changement de niveau envisagé sont déduits, dépasse au moins une première valeur de seuil.

2. Véhicule automobile (10) selon la revendication 1, **caractérisé en ce que** la première valeur de seuil est de plus déterminée en tenant compte de l'énergie apportée à la batterie de véhicule (44).

3. Véhicule automobile (10) selon les revendications 1 ou 2, **caractérisé en ce que** la première valeur de seuil est de plus déterminée en tenant compte des besoins en énergie actuels et/ou futurs d'au moins un autre consommateur (48) d'énergie électrique du véhicule automobile (10).

4. Véhicule automobile (10) selon l'une des revendications précédentes, **caractérisé en ce que** plusieurs limites de valeurs de seuil sont prévues, l'installation pneumatique (12) de régulation de niveau ne pouvant fonctionner que de manière limitée au-dessus de la première valeur de seuil et en dessous d'une deuxième valeur de seuil.

5. Véhicule automobile (10) selon la revendication 4, **caractérisé en ce qu'**un niveau intermédiaire situé entre un niveau de consigne visé et le niveau actuel du véhicule est commandé de telle sorte que le niveau d'énergie de la batterie de véhicule (44) dépasse une première valeur de seuil une fois que le niveau intermédiaire a été atteint.

6. Véhicule automobile (10) selon l'une des revendications précédentes, **caractérisé en ce que** la tension de batterie, le courant de batterie ou la capacité de la batterie de véhicule (44) sont utilisés comme valeurs de seuil.

7. Véhicule automobile (10) selon la revendication 4, **caractérisé en ce que** le niveau d'énergie de la batterie de véhicule (44) après le débranchement du moteur du véhicule est déterminé et conservé en mémoire, **en ce qu'**une troisième valeur de seuil des besoins en énergie admissibles de l'installation (12) de régulation de niveau peut être définie sur base du niveau d'énergie, **en ce que** la somme de l'énergie consommée par l'installation (12) de régulation de niveau pour le changement de niveau exécuté après le débranchement du moteur du véhicule et/ou pour le ou les remplissages du réservoir sous pression et des besoins en énergie nécessaires pour le changement de niveau envisagé et/ou le remplissage envisagé du réservoir sous pression est située en dessous de la troisième valeur de seuil.
